# EUROPEAN PATENT APPLICATION

(11) **EP 4 693 679 A1**
(43) Date of publication of application: **11.02.2026**
(21) Application number: 24927590.0
(22) Date of filing: 12.12.2024
(51) Int. Cl.: H01M 50/367

(54) **VENTING COVER OF BATTERY MODULE AND BATTERY PACK AND VEHICLE INCLUDING SAME**

(30) Priority: 10.06.2024 KR 20240075261
(71) Applicant: LG Energy Solution, Ltd., Seoul 07335 (KR)
(72) Inventor: PANG, Yoo Seok, Daejeon 34122 (KR); MIN, Jin Ki, Daejeon 34122 (KR); JEON, Sang Yoon, Daejeon 34122 (KR); KIM, Dong Hyun, Daejeon 34122 (KR)
(74) Representative: BCKIP Part mbB
(86) International application number: PCT/KR2024/020280
(87) International publication number: WO 2025/258762

(57) **Abstract**

Disclosed are a venting cover for a battery module, a battery pack, and a vehicle including the same, the venting cover being coupled to one side surface of the battery module, being configured to cover the battery module, and including a plurality of venting channels each having a channel shape extending in a longitudinal direction and having an inflow hole formed in a portion directed toward a battery cell embedded in the battery module, and a discharge hole formed at an end thereof, the plurality of venting channels being configured such that a venting material vented from the battery cell is introduced into the inflow holes, flows in a longitudinal direction, and then is discharged through the discharge holes, and support channels provided between the plurality of venting channels and each having a channel shape extending in the longitudinal direction, and a closed cross-section, the support channels being configured to support the venting channel.

## Description

### [Technical Field]

The present disclosure relates to a venting cover for a battery module, a battery pack, and a vehicle including the same, the venting cover having safety improved by smoothly discharging a flame or gas in an abnormal battery situation.

### [Background Art]

Recently, a technology for reducing carbon has been actively developed to solve environmental issues such as abnormal atmospheric temperatures. In order to reduce carbon, energy needs to be produced by environmentally friendly methods instead of fossil fuel, the produced energy needs to be stored in the form of electrical energy, and the stored electrical energy needs to be used for vehicles, various types of industrial sites, and homes.

In order to utilize electrical energy while reducing carbon, it is essential to use batteries capable of storing and retrieving electrical energy. Therefore, it is essential to ensure the performance of the battery to sufficiently store electrical energy and use the electrical energy without discomfort.

The battery mainly uses a redox reaction of metal ions. The battery uses metal ions with a high density to improve a capacity of the battery, charging and discharging performance, and efficiency of the battery. Many studies are also being conducted on materials, which constitute electrolytes, and on solid electrolytes and the like. However, there is a general problem in that stability of the battery deteriorates as the performance of the battery is developed.

Batteries used in vehicles, industries, or homes are manufactured in physical units called packs. The battery pack is configured such that a plurality of battery cells is embedded in a battery casing and sealed. The battery pack serves to prevent fire from spreading to the outside even in the event of an accident such as thermal runaway in the battery and protect the battery cells therein so that the battery cells are not degraded by being affected by an external environment, or the battery cells are not physically damaged.

In the battery pack, the plurality of battery cells is embedded in an intermediate form of a module or an assembly (cell module assembly (CMA)). The battery module or the assembly is configured by assembling the plurality of battery cells into one module or assembly. A plurality of modules is fastened into a pack casing, such that the battery pack is completely manufactured. When the battery is maintained, the maintenance may be performed on the unit of the module or the assembly, which facilitates the maintenance.

A plurality of unit battery cells, which constitutes the module or the assembly, includes a positive electrode, a negative electrode, and an electrolyte. Because the battery cell generates heat when the battery cell is charged and discharged, it is necessary to effectively dissipate heat from the battery cell. In addition, the battery module, the assembly, or the battery pack needs to be designed to efficiently dissipate heat to prevent a safety accident.

Meanwhile, the battery may be degraded when the battery is subjected to manufacturing errors, when the battery is excessively charged or discharged, or when the battery ages. Further, when the battery continues to deteriorate, a fire may eventually occur. Therefore, it is necessary to prepare in advance to prevent a fire from occurring in the battery. To this end, it is important to consistently sense a state of the battery and recognize and cope with, in advance, a problem when the problem occurs. In the event of an unexpected problem, it is necessary to minimize damage.

In particular, in the event of a fire in a particular battery module or battery cell in a battery pack, gas or flame may easily propagate to the adjacent battery module or the adjacent battery cell because the inside of the battery pack is sealed. Therefore, in the event of a fire in a particular battery module or battery cell present in the battery pack, it is important to smoothly vent gas from the battery module or the battery cell, in which the fire occurs, and to prevent or delay the propagation of flame to the adjacent battery module or the adjacent battery cell.

The foregoing explained as the background is intended merely to aid in the understanding of the background of the present disclosure, and is not intended to mean that the present disclosure falls within the purview of the related art that is already known to those skilled in the art.

### [Disclosure]

### [Technical Problem]

The present disclosure has been made in an effort to solve the above-mentioned problem, and an object of the present disclosure is to provide a venting cover for a battery module, a battery pack, and a vehicle including the same, the venting cover being configured to extend in a direction, in which battery cells are stacked, in the event of a fire in a particular battery module or battery cell in order to prevent the propagation of a flame or gas to an adjacent battery module or battery cell and smoothly vent the generated flame or gas to the outside, thereby improving battery safety.

Technical problems to be solved by the present disclosure are not limited to the above-mentioned technical problems, and other technical problems, which are not mentioned above, may be clearly understood from the following descriptions by those skilled in the art to which the present disclosure pertains.

### [Technical Solution]

In order to achieve the above-mentioned object, the present disclosure provides a venting cover for a battery module, which is coupled to one side surface of the battery module and covers the battery module, the venting cover including: a plurality of venting channels each having a channel shape extending in a longitudinal direction and having an inflow hole formed in a portion directed toward a battery cell embedded in the battery module, and a discharge hole formed at an end thereof, the plurality of venting channels being configured such that a venting material vented from the battery cell is introduced into the inflow holes, flows in a longitudinal direction, and then is discharged through the discharge holes; and support channels provided between the plurality of venting channels and each having a channel shape extending in the longitudinal direction, and a closed cross-section, the support channels being configured to support the venting channels.

In the case of the venting cover for a battery module according to the present disclosure, the venting channel and the support channel may be integrated by an extrusion process.

In the case of the venting cover for a battery module according to the present disclosure, the venting channel and the support channel may be made of a metallic material.

In the case of the venting cover for a battery module according to the present disclosure, the inflow hole may be formed as one side surface of the venting channel directed toward the battery cell is opened.

In the case of the venting cover for a battery module according to the present disclosure, the inflow hole may be formed through a part of one side surface of the venting channel directed toward the battery cell.

In the case of the venting cover for a battery module according to the present disclosure, the inflow hole may be formed as the venting channel is molded by extrusion in a closed cross-sectional shape together with the support channel and then a portion directed to the battery cell is cut.

In the case of the venting cover for a battery module according to the present disclosure, the venting channels and the support channels may be disposed alternately in a width direction of the venting cover for a battery module.

In the case of the venting cover for a battery module according to the present disclosure, the venting channels and the support channels may extend in a direction in which the battery cell extends.

In the case of the venting cover for a battery module according to the present disclosure, the venting channel may be positioned above the battery cell, and the venting channel may be disposed to at least partially overlap an upper end of the battery cell.

In the case of the venting cover for a battery module according to the present disclosure, a plurality of battery cells may be provided in the battery module, and a width of a portion of the support channel directed toward the battery cell may be smaller than an overall width of the pair of adjacent battery cells.

In the case of the venting cover for a battery module according to the present disclosure, an insulation part may be provided between the venting cover for the battery module and the battery module.

In the case of the venting cover for a battery module according to the present disclosure, the insulation part may be made of a fire resistance material.

In the case of the venting cover for a battery module according to the present disclosure, the insulation part may have a panel shape, and a venting hole may be formed in a portion of the venting channel corresponding to the inflow hole.

In the case of the venting cover for a battery module according to the present disclosure, a plurality of venting holes may be formed in the insulation part, and the insulation part may be coupled to the support channel at a point between the adjacent venting holes.

In the case of the venting cover for a battery module according to the present disclosure, a bonding portion may be formed by bending an end of the venting cover for a battery module, the bonding portion may be tightly attached to the battery module, and the insulation part may be formed between the bonding portion and the battery module.

The venting cover for a battery module according to the present disclosure, may further include: an insulation cover coupled to an end of the venting cover for a battery module and configured to cover one surface of the battery module to insulate a portion between the pair of adjacent battery modules.

In the case of the venting cover for a battery module according to the present disclosure, the insulation cover may have a panel shape and be made of a fire resistance material.

In the case of the venting cover for a battery module according to the present disclosure, a module cover having a plurality of through-holes may be provided to cover the battery module, the venting cover may be coupled to the module cover so that the inflow holes of the venting channels and the through-holes of the module cover communicate with one another while facing one another, and the venting material generated in the battery cell may be introduced into the venting channel through the through-holes and the inflow holes.

A battery pack according to the present disclosure includes the above-mentioned venting cover for a battery module.

A vehicle according to the present disclosure includes the above-mentioned battery pack.

### [Advantageous Effects]

According to the venting cover for a battery module, the battery pack, and the vehicle including the same of the present disclosure, in the event of a fire in a particular battery module or battery cell, a flame or gas is guided along the venting cover for a battery module extending in the direction in which the battery cells are stacked, the propagation of the flame to the adjacent battery module or battery cell may be prevented, and the gas is smoothly vented from the battery module or battery cell with a problem, such that the safety of the high-level system, which utilizes the venting cover for a battery module, may be improved.

### [Description of Drawings]

FIGS. 1 and 2 are views illustrating a venting cover for a battery module according to an embodiment of the present disclosure.
FIG. 3 is a view illustrating a venting cover for a battery module according to another embodiment of the present disclosure.
FIG. 4 is a view illustrating a state in which the venting cover for a battery module illustrated in FIGS. 1 and 2 is coupled to a battery module.
FIG. 5 is a view illustrating cross-sections of the venting cover for a battery module and the battery module illustrated in FIG. 4.
FIG. 6 is an enlarged view illustrating parts of the venting cover for a battery module and the battery module illustrated in FIG. 5.
FIG. 7 is a view illustrating a battery pack and a vehicle to which the venting cover for a battery module of the present disclosure is applied.

### [Best Mode]

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

Singular expressions include plural expressions unless clearly described as different meanings in the context. In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

The suffixes "module", "unit", "part", and "portion" used to describe constituent elements in the following description are used together or interchangeably in order to facilitate the description, but the suffixes themselves do not have distinguishable meanings or functions. When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

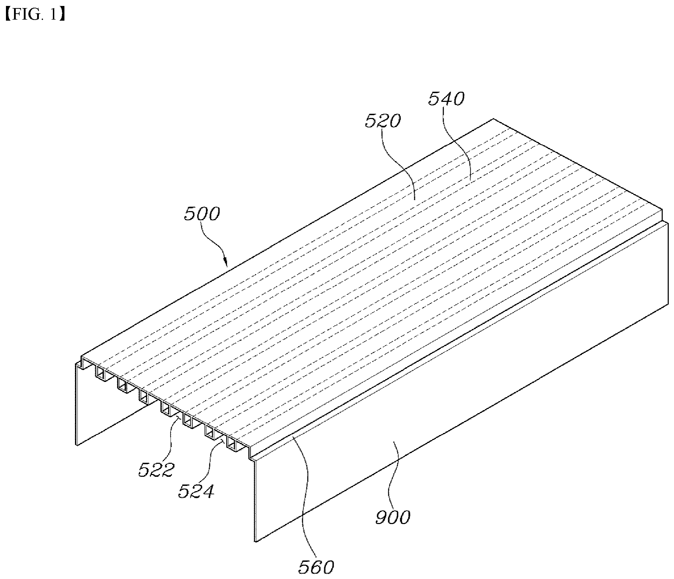

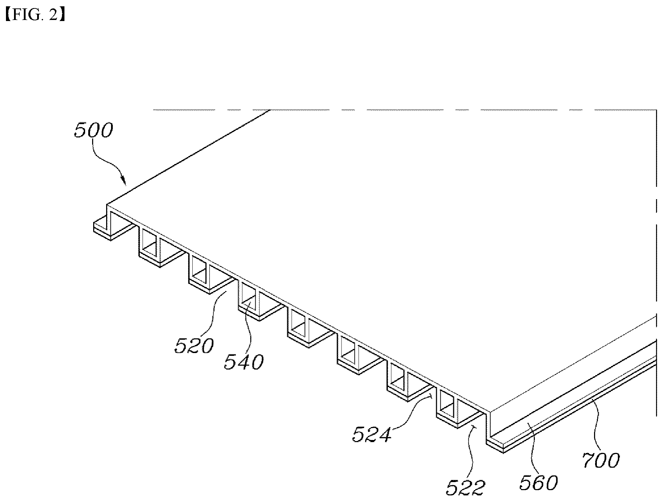

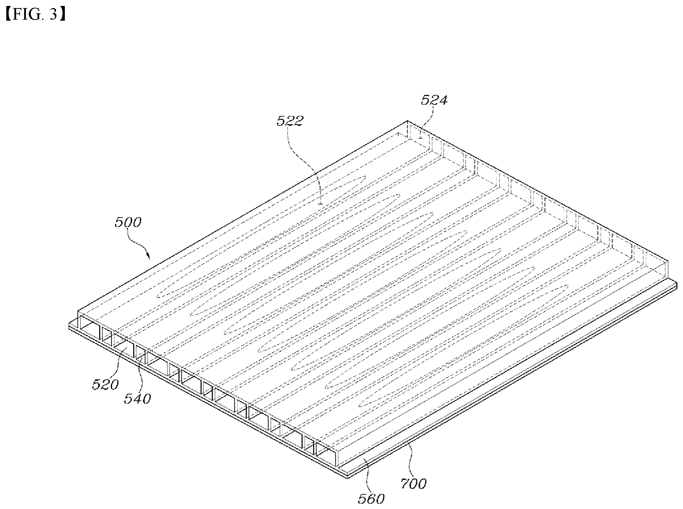

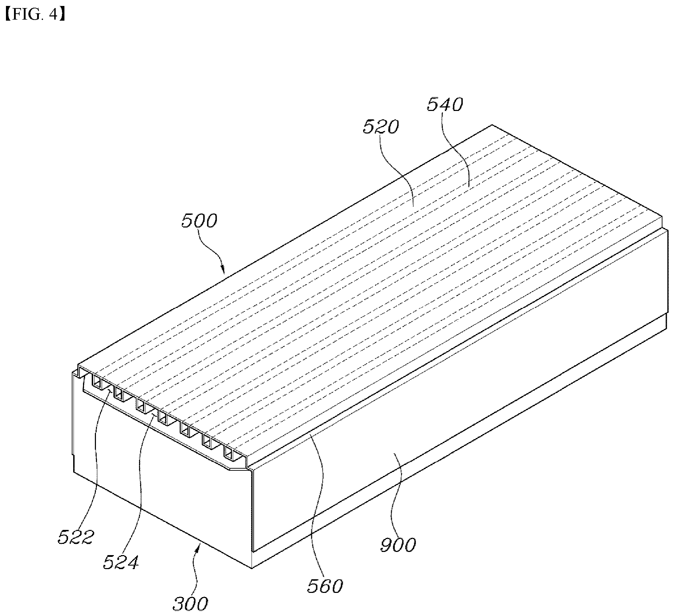

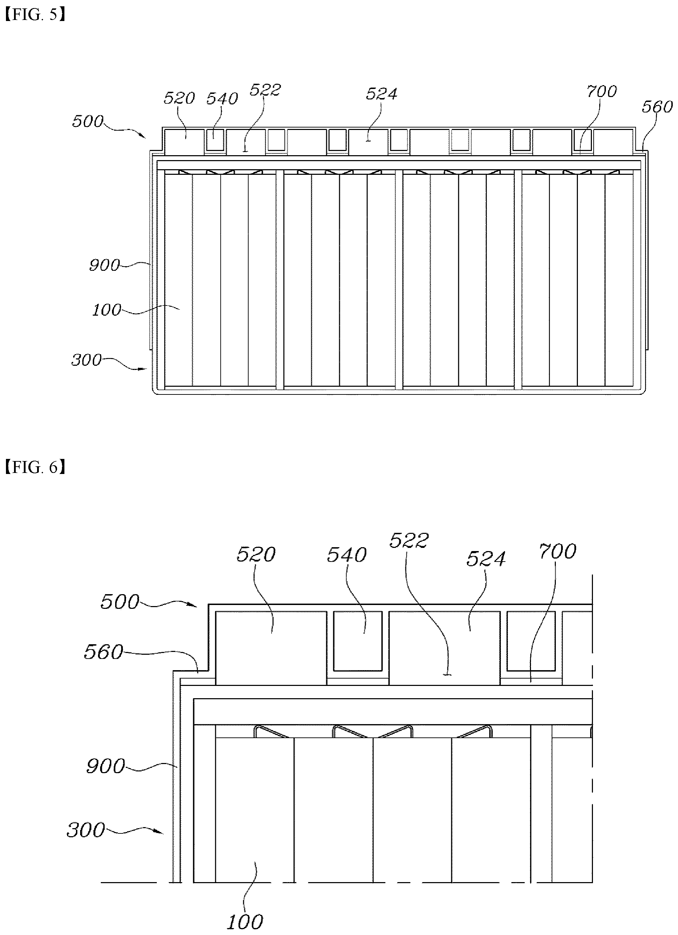

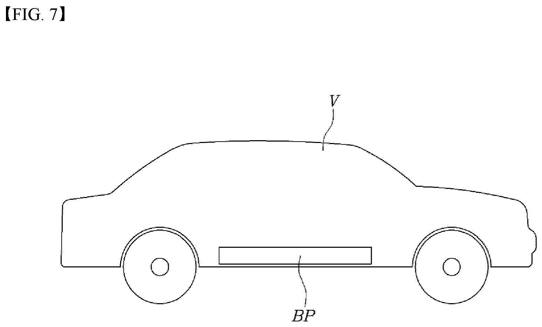

FIGS. 1 and 2 are views illustrating a venting cover for a battery module according to an embodiment of the present disclosure, FIG. 3 is a view illustrating a venting cover for a battery module according to another embodiment of the present disclosure, FIG. 4 is a view illustrating a state in which the venting cover for a battery module illustrated in FIGS. 1 and 2 is coupled to a battery module, FIG. 5 is a view illustrating cross-sections of the venting cover for a battery module and the battery module illustrated in FIG. 4, FIG. 6 is an enlarged view illustrating parts of the venting cover for a battery module and the battery module illustrated in FIG. 5, and FIG. 7 is a view illustrating a battery pack and a vehicle to which the venting cover for a battery module of the present disclosure is applied.

Hereinafter, embodiments disclosed in the present specification will be described in detail with reference to the accompanying drawings. The same or similar constituent elements are assigned with the same reference numerals regardless of the reference numerals, and the repetitive description thereof will be omitted.

In general, a battery includes battery cells 100, battery module 300 each made by assembling the plurality of cells 100 with a certain number, and a battery pack BP having a final shape of the battery made of assembling the plurality of modules 300. However, a strong exothermic reaction or explosion may occur in the battery because of various causes such as damage to a material constituting the battery cell 100, a defect in the battery, an impact from the outside, or over-charging or over-discharging of the battery. Because this exothermic reaction or explosion mainly occurs in the battery module 300 or the battery cell 100 in the battery pack BP, there is a problem in that a flame or gas easily propagates to the adjacent battery module 300 or battery cell 100.

In order to obtain high energy efficiency of the battery, the battery cells 100 are stacked at a high density in the battery pack BP. For this reason, in case that a fire occurs in any one of the battery cells 100 in the battery pack BP, the fire may easily propagate to the adjacent battery cell 100 because the battery cells 100 are stacked at a high density in the battery pack BP with sealed interior. If a gas or flame generated by a fire occurring in a particular battery module 300 or battery cell 100 quickly propagates to the adjacent battery module 300 or the adjacent battery cell 100, secondary damage may occur. Therefore, it is important to maximally prevent a thermal propagation phenomenon in which, in the event of a fire in the battery module 300 or battery cell 100 in the battery pack BP, a flame or gas propagates to another battery module 300 or battery cell 100. Further, it is important to smoothly vent the gas or flame from the battery module 300 or battery cell 100 in which the fire occurs.

In the related art, when a gas or flame is generated by a fire in a particular battery module 300 or battery cell 100, the gas or flame is intended to be discharged through a through-hole present in a module cover or the like of the battery module 300. In this case, the gas or flame may be smoothly vented from the battery module 300 or battery cell 100 in which the fire occurs. However, there frequently occurs a situation in which the gas or flame discharged to the outside of the battery module 300 through the through-hole is introduced reversely through a through-hole of the adjacent battery module 300 or introduced back through the through-hole through which the gas or flame has been discharged. For this reason, it is difficult to prevent the thermal propagation to the adjacent battery module 300 or the adjacent battery cell 100.

As illustrated in FIG. 1, the present disclosure provides a structure in which a gas or flame generated in the event of a fire in a particular battery cell 100 is vented through venting channels 520 provided in a direction in which the battery cells 100 extend, and the venting channels 520 are supported from the battery module 300 by support channels 540, such that the gas or flame may be smoothly discharged. That is, the present disclosure proposes a venting cover 500 for the battery module 300, in which the venting channels 520 and the support channels 540 are used in the event of a fire in the battery module 300 or the battery cell 100, such that a gas or flame is smoothly vented from the battery module 300 or the battery cell 100, and a reverse flow of the gas or flame into the adjacent battery module 300 or battery cell 100 is prevented or minimized, such that overall safety of the battery may be improved.

Specifically, as illustrated in FIGS. 2 and 3, the venting cover 500 for the battery module 300 of the present disclosure includes the venting channels 520 each having an inflow hole 522 and a discharge hole 524, the support channels 540 configured to support the venting cover 500 from the battery module 300, and bonding portions 560 bonded to the battery module 300. As illustrated in FIG. 4, the venting cover 500 for the battery module 300 is coupled to a portion of one side surface of the battery module 300 through which a gas or flame is vented in the event of a fire in the battery cell 100 in the battery module 300. Insulation covers 900 are coupled to two opposite ends of the venting cover 500 and cover two opposite surfaces of the battery module 300.

Therefore, as illustrated in FIGS. 2 and 3, in the event of a fire in the battery cell 100 in the battery module 300, a gas or flame is introduced into the venting channel 520 through the inflow hole 522 of the venting cover 500, and the introduced gas or flame is discharged to the outside through the discharge hole 524. In addition, because the venting channel 520 and the support channel 540 extend in the direction in which the battery cells 100 are stacked in the battery module 300, the propagation of the gas or flame to the adjacent battery cell 100 may be prevented. Further, the insulation covers 900 coupled to the two opposite ends of the venting cover 500 may also prevent or minimize the propagation of the gas or flame between the adjacent battery modules 300.

Meanwhile, the insulation cover 900 illustrated in FIG. 1 may be made of a material, such as mica (mica material), having heat resistance and insulation in order to prevent a gas or flame, which is generated by a fire occurring in a particular battery module 300 or battery cell 100 from propagating to the adjacent battery module 300 or the battery cell 100 present in the adjacent battery module 300. As illustrated in FIG. 1, the insulation covers 900 covers the two opposite surfaces of the battery module 300 based on the extension direction in which the battery cells 100 are stacked. However, in some instances, the insulation covers 900 may cover the battery module 300 at various points such as a lateral or lower surface in all directions of the battery module 300, thereby preventing the propagation of a gas or flame between the adjacent battery modules 300.

In the present disclosure, as illustrated in FIG. 4, the venting cover 500 coupled to one side surface of the battery module 300 and configured to cover the battery module 300 has the venting channels 520 and serves to introduce and discharge a venting material such as a gas or flame. The venting channel 520 is provided in the form of a channel extending in a longitudinal direction of the battery module 300 and has a structure in which the inflow hole 522 is formed in a portion directed toward the battery cells 100 embedded in the battery module 300, and the discharge hole 524 is formed at an end of the venting channel 520.

Specifically, as illustrated in FIG. 1, the plurality of venting channels 520 are formed in the venting cover 500 of the battery module 300 of the present disclosure so that the venting material vented from the battery cells 100 is introduced into the inflow holes 522, flows in the longitudinal direction, and then is discharged through the discharge holes 524 formed at two opposite ends of the inflow holes 522. The support channels 540 are disposed between the venting channels 520 and provided in the form of channels extending in the longitudinal direction of the battery module 300. The support channel 540 includes a shape with a closed cross-section.

The support channel 540 is a channel that constitutes the venting cover 500 of the battery module 300 together with the venting channel 520. The support channel 540 serves to space the battery module 300 and the venting cover 500 for the battery module 300 at a predetermined distance and support the battery module 300 and the venting cover 500 so that the venting material may be smoothly discharged to the outside through the venting channel 520. Because the venting material is introduced into the inflow hole 522 is discharged to the outside through the discharge hole 524, the venting material moves along the venting channel 520, and the venting material is not introduced or moved into the support channel 540. Therefore, the support channel may have a structure closed at two opposite ends or opened at two opposite ends as illustrated in FIGS. 1 to 3 as long as the support channel may securely support the venting cover 500 for the battery module 300 or the venting channel 520 from the battery module 300.

In the event of a fire in the battery cell 100, the venting material is discharged through one side surface of the battery module 300, and the venting material includes a gas, a flame, or flammable particulates such as foreign substances generated in the battery cell 100 in the event of the fire or materials that causes an abnormal battery situation. With reference to FIG. 1, the venting material is introduced into the venting channel 520 through the inflow hole 522, moved along the venting channel 520, and then vented to the outside through the discharge hole 524. Because the venting channel 520 is formed in parallel with the longitudinal direction of the venting cover 500 for the battery module 300, the venting material is less likely to propagate to the adjacent battery module 300 or battery cell 100. Therefore, even if a fire occurs in any one battery module 300 or battery cell 100 in the battery pack BP, it is possible to prevent or minimize the thermal propagation of a gas or flame to the adjacent battery module 300 or the adjacent battery cell 100.

As illustrated in FIGS. 2 and 3, the venting channel 520 and the support channel 540, which constitute the venting cover 500 for the battery module 300, may be formed as an integrated structure. The venting cover 500 is mounted in a vehicle V. The components mounted in the vehicle V need to withstand various abnormal situations such as an impact applied from the outside or the occurrence of a fire in battery. Therefore, the venting channel 520 and the support channel 540 may be made of a metallic material, and particularly made of aluminum that is easy to process and has excellent durability among metallic materials. The venting channel 520 and the support channel 540 are integrated by an extrusion process, such that the durability of the venting cover 500 for the battery module 300 may be improved. In this case, the extrusion molding is performed in a shape in which all the cross-sections of the venting channel 520 and the support channel 540 are closed, and then a portion directed toward the battery cell 100 is cut by a processing method using a laser or the like, such that the inflow hole 522 may be formed. The cross-sections may also be subjected to processing such as cutting, such that the discharge hole 524 may be formed.

With reference to FIG. 1, the inflow hole 522 constitutes a part of the venting channel 520. As illustrated in FIG. 2, the inflow hole 522 may be formed by entirely opening one side of a portion of the venting channel 520 directed toward the battery module 300 or the battery cell 100. As illustrated in FIG. 3, the inflow hole 522 may be formed by cutting a part of one surface of the venting channel 520 directed toward the battery module 300 or the battery cell 100. In case that a part of one surface of the venting channel 520 is cut, it is possible to minimize the likelihood that the venting materials will be introduced into the battery module 300 or the battery cell 100 again in comparison with the case in which one side of the venting channel 520 is entirely opened. However, in comparison with the case in which one side of the venting channel 520 is entirely opened, the amount of venting material introduced into the inflow hole 522 is small, and the venting material may not be smoothly vented.

In addition to the illustrated case, the venting cover 500 for the battery module 300 of the present disclosure has the inflow holes 522 into which the venting material vented from the battery module 300 or the battery cell 100 may be introduced, and the venting channels 520 are connected to the inflow holes 522. Therefore, the inflow hole 522 or the discharge hole 524 is not necessarily limited to the shape in the illustrated embodiment as long as the venting material may be discharged to the outside through the discharge hole 524 along the venting channel 520.

As illustrated in FIGS. 2 and 3, the venting channels 520 and the support channels 540 are disposed alternately in a width direction of the venting cover 500 for the battery module 300. The venting channel 520 may have a channel shape having a larger and wider area than the support channel 540 in order to smoothly introduce and discharge the venting material discharged from the battery module 300 or the battery cell 100 in which a fire occurs. However, in case that a size of the venting channel 520 is excessively large, the venting material introduced through the inflow hole 522 stays in the venting channel 520 without being discharged along the venting channel 520, and the venting material may not be smoothly discharged. Therefore, it is important for the venting channel 520 to have an appropriate size and area so that the venting material may appropriately flow toward the discharge hole 524. In addition, the venting channel 520 needs to be coupled to one side surface of the battery module 300 but does not need to be tightly attached to the battery module 300 in order to smoothly vent the venting material. Therefore, it is necessary to space the venting channel 520 from the battery module 300 at a predetermined distance or longer.

In the present disclosure, the support channels 540 are disposed between the venting channels 520 to prevent the venting channel 520 from being excessively increased in size. The venting cover 500 for the battery module 300 may be securely supported on one side surface of the battery module 300 by the support channels 540, such that the venting material produced in the battery module 300 or the battery cell 100 may be smoothly discharged to the outside.

The battery may have excellent energy efficiency by stacking the battery cells 100 at a high density. In order to stack the battery cells 100 at a high density, the plurality of battery cells 100 may be stacked in a predetermined direction in the battery module 300. Therefore, in order to efficiently discharge the venting material, which is discharged from the battery cells 100 stacked in the predetermined direction, to the outside, the venting channels 520 and the support channels 540, which constitute the venting cover 500 for the battery module 300, need to be formed in the direction in which the battery cells 100 are stacked and extend in the battery module 300.

Because a gas or flame is discharged upward in the event of a fire in the battery cell 100, the venting channel 520 and the support channel 540 need to be formed above a location where the battery cells 100 are disposed. In addition, the inflow hole 522 of the venting channel 520 is disposed at a position corresponding to the point at which the venting material in the battery cell 100 is discharged, such that the venting material may be efficiently introduced into the venting channel 520. Eventually, the venting channel 520 needs to be disposed above the point at which the venting material in the battery cell 100 is discharged, and the venting channel 520 needs to extend in the direction in which the battery cells 100 are stacked. With this structure, a gas or flame, which is generated in the event of a fire in the battery module 300 or the battery cell 100, may be smoothly introduced into the venting channels 520 through the inflow holes 522, and the gas or flame introduced into the venting channels 520 is guided only toward the discharge holes 524 formed at the two opposite ends of the venting cover 500 for the battery module 300, which may prevent the gas or flame from being reversely introduced into the adjacent battery cell 100.

The venting channels 520 are positioned above the battery cells 100 so that the venting material, which is discharged in the event of a fire in the battery cell 100 in the battery module 300, may be smoothly vented. As illustrated in FIGS. 5 and 6, the venting channels 520 may be disposed to at least partially overlap an upper end of the battery cell 100. Because the venting material such as a gas or flame is vented upward from the battery cells 100 in the event of a fire in the battery cell 100, the venting channels 520 may be positioned above the battery cell 100. The point at which the venting material is vented from the battery cell 100 is disposed to be in contact with the inflow hole 522 of the venting channel 520, such that the venting material such as a gas or flame caused by a fire may be smoothly introduced through the inflow hole 522.

However, as illustrated in FIGS. 5 and 6, the support channel 540 is not the point at which the venting material is introduced or discharged in the event of a fire in the battery cell 100. Therefore, a width of a portion directed toward the battery cell 100 needs to be smaller than an overall width of the pair of battery cells 100. The support channels 540 are merely the structures that may support the venting cover 500 for the battery module 300 from the battery module 300 so that the venting material may be smoothly discharged through the venting channels 520, but the support channels 540 are not the points at which the venting material is introduced or discharged in the event of a fire in the battery cell 100. Therefore, not any one of the battery cells 100 disposed in the battery module 300 should interfere with the upper point at which the venting material is discharged through the support channels 540. Therefore, an area of a portion, which is in contact with the battery module 300 directed toward the battery cell 100 of the support channel 540, is designed to be smaller in overall width than the pair of adjacent battery cells 100, thereby preventing a situation in which the venting material, which is generated in the event of a fire in the battery cell 100, interferes with the support channels 540 without being introduced into the inflow hole 522 in the venting channel 520.

Meanwhile, the venting cover 500 for the battery module 300 is made of a metallic material and thus has conductivity. The battery module 300 or the battery cell 100 is also made of a metallic material through which an electric current flows. In case that the materials, which constitute the inside of the battery cell 100, are damaged, an electrical short circuit may occur, and an overcurrent may flow. Therefore, electrical insulation is required to be provided between the venting cover 500 for the battery module 300 and the battery module 300 including the battery cells 100. In addition, even under a high-temperature or high-pressure environment caused by a fire occurring in the battery module 300 or the battery cell 100, the electrical insulation between the venting cover 500 for the battery module 300 and the battery module 300 needs to be continuously maintained.

Therefore, in the present disclosure, as illustrated in FIGS. 2 and 3, the insulation part 700, which uses an insulator made of a fire resistance or heat resistance material capable of withstanding even a high-temperature or high-pressure situation, is disposed between the venting cover 500 for the battery module 300 and the battery module 300, such that even in an abnormal situation in which an electrical short circuit or a fire occurs in the battery module 300 or the battery cell 100, the venting cover 500 for the battery module 300 may not be damaged, and the venting material may be stably discharged.

Therefore, the insulation part 700 disposed between the venting cover 500 for the battery module 300 and the battery module 300 may be made of an insulating material that stably electrically insulates the portion between the venting cover 500 for the battery module 300 and the battery module 300, i.e., made of a material, such as mica (mica material), having fire resistance or heat resistance and being capable of stably electrically insulating the portion between the venting cover 500 for the battery module 300 and the battery module 300 even under a high-temperature or high-pressure environment established in the event of a fire in the battery cell 100 or the like.

In the embodiment illustrated in FIG. 2, because the entire inflow hole 522 of the venting channel 520 is opened, the insulation part 700 is coupled to the portion where the support channel 540 and the battery module 300 are in contact with each other and the portion where the bonding portion 560 and the battery module 300 are in contact with each other. As illustrated in FIG. 3, in case that the portion of the venting channel 520 directed toward the battery cell 100 is not entirely opened but defines a part of the inflow hole 522 at the point at which the venting material is discharged from the battery cell 100, the insulation part 700 is formed on a portion of the surface of the venting channel 520, which is directed toward the battery cell 100 and excludes the inflow hole 522, and the insulation part 700 is bonded to the battery module 300. Even in the case in FIG. 3, the insulation part 700 is formed on the portion where the support channel 540 and the bonding portion 560 are in contact with the battery module 300 as illustrated in FIG. 2, such that the electrical insulation between the venting cover 500 for the battery module 300 and the battery module 300 may be assuredly ensured.

As illustrated in FIGS. 1 to 3, the venting cover 500 having the venting channel 520 has the bonding portion 560. The bonding portion 560 is formed by bending an end of the venting cover 500 for the battery module 300. The bonding portion 560 is a portion where the venting channel 520 or the support channel 540 of the venting cover 500 for the battery module 300 are not formed. As illustrated in FIGS. 5 and 6, the bonding portion 560 is formed in a planar shape tightly attached to the battery module 300. Because the venting cover 500 for the battery module 300 is coupled to the outer surface of the battery module 300, the bonding portions 560 may be positioned at the two opposite ends of the venting cover 500 for the battery module 300 in order to increase a coupling force between the venting cover 500 for the battery module 300 and the battery module 300, thereby increasing the coupling force between the venting cover 500 for the battery module 300 and the battery module 300.

The venting cover 500 for the battery module 300 and the battery module 300 may be coupled by being bonded and fixed by a bonding agent with heat resistance. Because the outer surface of the battery module 300 is also made of metal, the venting cover 500 for the battery module 300 and the battery module 300 may be coupled by welding or the like between metals. In addition, the venting cover 500 for the battery module 300 and the battery module 300 may be coupled by various methods such as a mechanical fastening method.

In case that a larger bonding portion 560 is ensured by this coupling method, it is possible to further increase the coupling force between the venting cover 500 for the battery module 300 and the battery module 300. Therefore, when the venting cover 500 for the battery module 300 is designed, a ratio between the venting channel 520 and the support channel 540 for venting the venting material in the event of a fire in the battery module 300 or the battery cell 100 and a proportion of the bonding portion 560 for increasing the coupling force between the venting cover 500 for the battery module 300 and the battery module 300 may be considered and determined appropriately depending on the product of the corresponding battery module 300.

As illustrated in FIG. 3, the insulation part 700 is formed on the portion of the venting cover 500 for the battery module 300 that is in contact with the battery module 300, and the insulation part 700 needs to cover the entire portion where the venting cover 500 for the battery module 300 and the battery module 300 are in contact with each other. Therefore, the insulation part 700 may be manufactured in a panel shape.

However, because the inflow hole 522 needs to be formed in the surface of the venting cover 500 for the battery module 300 directed toward the battery cell 100, a venting hole is also formed in the insulation part 700 at the portion where the inflow hole 522 is formed in the venting cover 500 for the battery module 300, as illustrated in FIG. 3, such that the venting material generated by a fire or the like in the battery cell 100 may be smoothly introduced into the inflow hole 522. The venting hole may be formed in the portion of the insulation part 700 having the panel shape that corresponds to the inflow hole 522 of the venting cover 500 for the battery module 300. As illustrated in FIG. 2, in case that the inflow hole 522 has the shape in which one side of the venting channel 520 is entirely opened, the insulation part 700 cannot be coupled to the venting channel 520, and the insulation part 700 is bonded only to the surface of the support channel 540 directed toward the battery cell 100.

In the battery module 300, the through-hole may be formed in the module cover such as a module lid. The through-hole is a passageway for smoothly discharging the venting material, such as a gas or flame produced in the battery module 300, to the outside of the battery module 300 when an abnormal situation, such as a fire in the stacked battery cells 100 or in the battery module 300 in which the plurality of battery cells 100 are stacked, occurs. The plurality of through-holes is present in the form of shapes cut in the module cover.

The venting cover 500 for the battery module 300 includes the venting channels 520 and the support channels 540. The venting channel 520 has the structure having the inflow hole 522 and the discharge hole 524. Therefore, in order to smoothly discharge the venting material, the inflow hole 522 of the venting channel 520 may be formed at the point corresponding to the through-hole present in the module cover of the battery module 300.

Therefore, in case that the venting cover 500 for the battery module 300 of the present disclosure is coupled to the battery module 300 having the through-hole formed in one surface thereof, the inflow hole 522 of the venting channel 520 and the through-hole of the module cover are formed to communicate with each other while facing each other, and the venting material generated in the battery module 300 or the battery cell 100 is introduced into the venting channel 520 through the through-hole of the module cover and the inflow hole 522 of the venting cover 500, flows along the venting channel 520, and then is discharged to the outside along the discharge hole 524.

In addition, because the inflow hole 522 needs to be disposed at the position corresponding to the through-hole present in the module cover of the battery module 300, the support channel 540 is formed at a point that avoids the through-hole of the module cover, such that the venting material generated in an abnormal situation in the battery module 300 or the battery cell 100 needs to be smoothly discharged to the outside.

Even in case that the venting cover of the present disclosure is coupled to the battery module 300 having the through-hole formed in one surface thereof, the insulation part 700 needs to perform the electrical insulation between the venting cover 500 for the battery module 300 and the battery module 300 but should not interfere with the discharge of the venting material through the venting cover 500 for the battery module 300. Therefore, the plurality of venting holes may also be formed in the insulation part 700 at the points corresponding to the inflow holes 522 of the venting cover 500 and the through-holes of the module cover in order to smoothly discharge the venting material. That is, the insulation part 700 has the venting holes formed at the positions corresponding to the inflow holes 522 of the venting cover 500 and the through-holes of the module cover, such that the venting material may be smoothly discharged. The support channels 540 of the venting cover 500 for the battery module 300 are formed at the points between the adjacent venting holes of the insulation part 700, such that the insulation part 700 needs to assuredly perform electrical insulation between the support channel 540 and the battery module 300.

As illustrated in FIG. 1, the venting cover 500 for the battery module 300 includes the insulation cover 900 coupled to the end and configured to cover one surface of the battery module 300 to insulate the portion between the pair of battery modules 300. The insulation cover 900 has a panel shape and needs to electrically insulate the adjacent battery modules 300. Therefore, the insulation cover 900 needs to be made of an insulating material and made of a fire resistance or heat resistance material so that the insulation cover 900 may perform the insulation function even in the event of a fire in the battery module 300 or the battery cell 100.

As illustrated in FIG. 4, the insulation cover 900 has a structure capable of being attached to a lateral surface of the venting cover 500 for the battery module 300, such that the insulation cover 900 may be easily coupled to the venting cover 500 for the battery module 300 in accordance with the shape of the battery module 300. In addition, because the venting cover 500 for the battery module 300 covers one surface of the battery module 300 through which the venting material is discharged, the insulation covers 900 are coupled to the two opposite ends of the venting cover 500 for the battery module 300 and cover lateral portions of the battery module 300. When the insulation covers 900 cover the lateral portions of the battery module 300, the insulation covers 900 may be in contact with each other or adjacent to each other between the adjacent battery modules 300. Therefore, even if an abnormal situation, such as an electrical short circuit or a fire, occurs at one point in the battery pack BP, the insulation cover 900 may serve as a primary barrier, which may prevent the thermal propagation to the adjacent battery module 300.

As illustrated in FIG. 4, the insulation cover 900 is coupled to the lateral portion of the venting cover 500 for the battery module 300 to increase the coupling force between the venting cover 500 for the battery module 300 and the battery module 300. Therefore, the venting cover 500 for the battery module 300 is more stably fixed to the battery module 300. Because the venting cover 500 for the battery module 300 is stably fixed to the battery module 300, the venting channels 520 and the support channels 540 formed in the venting cover 500 for the battery module 300 are also securely fixed. Therefore, even in a situation caused by an impact applied from the outside of the battery module 300 or the occurrence of a fire, the venting cover 500 for the battery module 300 may smoothly serve to discharge the venting material produced in the battery module 300 or the battery cell 100.

Meanwhile, as illustrated in FIG. 7, the venting cover 500 for the battery module 300 according to the present disclosure may be applied to the battery packs BP of various vehicles V such as internal combustion engine vehicles, electric vehicles, hybrid vehicles, and fuel cell electric vehicles. In addition to the vehicle V, the battery system may be applied to the battery packs BP in various fields, such as industrial energy storage systems (ESSs) or household ESSs, and small-scale battery packs.

While the specific embodiments of the present disclosure have been illustrated and described, it will be obvious to those skilled in the art that the present disclosure may be variously modified and changed without departing from the technical spirit of the present disclosure defined in the appended claims.

## Claims

1. A venting cover for a battery module, which is coupled to one side surface of the battery module and covers the battery module, the venting cover comprising:
a plurality of venting channels each having a channel shape extending in a longitudinal direction and having
an inflow hole formed in a portion directed toward a battery cell embedded in the battery module, and
a discharge hole formed at an end thereof, the plurality of venting channels being configured such that a venting material vented from the battery cell is introduced into the inflow holes, flows in a longitudinal direction, and then is discharged through the discharge holes; and
support channels provided between the plurality of venting channels and each having a channel shape extending in the longitudinal direction, and a closed cross-section, the support channels being configured to support the venting channels.

2. The venting cover of claim 1, wherein the venting channel and the support channel are integrated by an extrusion process, and the venting channel and the support channel are made of a metallic material.

3. The venting cover of claim 1, wherein the inflow hole is formed as one side surface of the venting channel directed toward the battery cell is opened.

4. The venting cover of claim 1, wherein the inflow hole is formed through a part of one side surface of the venting channel directed toward the battery cell.

5. The venting cover of claim 1, wherein the inflow hole is formed as the venting channel is molded by extrusion in a closed cross-sectional shape together with the support channel and then a portion directed to the battery cell is cut.

6. The venting cover of claim 1, wherein the venting channels and the support channels are disposed alternately in a width direction of the venting cover for a battery module, and the venting channels and the support channels extend in a direction in which the battery cell extends.

7. The venting cover of claim 1, wherein the venting channel is positioned above the battery cell, and the venting channel is disposed to at least partially overlap an upper end of the battery cell.

8. The
venting cover of claim 1, wherein
a plurality of battery cells are provided in the battery module, and a width of a portion of the support channel directed toward the battery cell is smaller than an overall width of the pair of adjacent battery cells.

9. The venting cover of claim 1, wherein an insulation part is provided between the venting cover for the battery module and the battery module, and the insulation part is made of a fire resistance material.

10. The venting cover of claim 11, wherein the insulation part has a panel shape, a venting hole is formed in a portion of the venting channel corresponding to the inflow hole,
a plurality of venting holes is formed in the insulation part, and the insulation part is coupled to the support channel at a point between the adjacent venting holes.

11. The venting cover of claim 9, wherein a bonding portion is formed by bending an end of the venting cover for a battery module, the bonding portion is tightly attached to the battery module, and the insulation part is formed between the bonding portion and the battery module.

12. The venting cover of claim 1, further comprising:an insulation cover coupled to an end of the venting cover for a battery module and configured to cover one surface of the battery module to insulate a portion between the pair of adjacent battery modules,
wherein the insulation cover has a panel shape and is made of a fire resistance material.

13. The venting cover of claim 1, wherein a module cover having a plurality of through-holes is provided to cover the battery module, the venting cover is coupled to the module cover so that the inflow holes of the venting channels and the through-holes of the module cover communicate with one another while facing one another, and the venting material generated in the battery cell is introduced into the venting channel through the through-holes and the inflow holes.

14. A battery pack comprising the venting cover for a battery module of claim 1.

15. A vehicle comprising the battery pack of claim 14.
